# EUROPÄISCHE PATENTSCHRIFT

(11) **EP 1 882 554 B1**
(45) Veröffentlichungstag und Bekanntmachung des Hinweises auf die Patenterteilung: **26.12.2012**
(21) Anmeldenummer: 07014580.0
(22) Anmeldetag: 25.07.2007
(51) Int. Cl.: B25B 31/00, B23K 37/047

(54) **Vorrichtung zum Verstellen von Positionierungsstiften zur Lagerfixierung von Werkstücken auf Werkstückträgern**
Device for adjusting positioning pins for fastening workpieces to workpiece supports
Dispositif destiné à régler des crayons de positionnement destinés à la fixation en place de pièces à usiner sur des portes-pièces

(30) Priorität: 29.07.2006 DE 102006035151
(43) Veröffentlichungstag der Anmeldung: 30.01.2008
(73) Patentinhaber: DE-STA-CO Europe GmbH, 61440 Oberursel (DE)
(72) Erfinder: Schauss, Peter, 65439 Flörsheim (DE)
(74) Vertreter: Wolf, Günter

(56) Entgegenhaltungen:
- EP-A- 0 894 572
- DE-A1- 19 601 427
- DE-U1- 20 116 016

## Beschreibung

Die Erfindung betrifft eine Vorrichtung zum Verstellen von Positionierungsstiften zur Lagefixierung von Werkstücken, insbesondere Blechen auf Werkstückträgern gemäß Oberbegriff des Patentanspruches 1.

Eine Vorrichtung ähnlicher Art zur Lagefixierung insbesondere von Blechen ist nach dem DE 201 16 016 U1 bekannt, und zwar ähnlicher Art deshalb, weil deren den Positionierungsstift tragende Führungsstange einerseits längsverstellbar andererseits aber um ihre Achse konstruktionsbedingt verdrehfest mit einer besonderen Verstellmechanik verbunden ist.
Solche mit Positionierungsstiften bestückte Verstellvorrichtungen werden benötigt, wenn bspw. Bleche in genau vorgegebener Lage zueinander zusammengeschweißt werden müssen, wie dies beispielsweise bei Karrosserieblechen der Fall ist. Dafür sind die Bleche an geeigneten Stellen mit Positionierungsöffnungen versehen, mit denen sie auf zu den Öffnungen querschnittsentsprechende Postionierungsstifte aufgesteckt und damit einander lagegenau für bspw. Verschweißungen zugeordnet werden können.
Diese Positionierungsstifte sitzen dabei an bzw. in den freien Enden der Führungsstange der eingangs genannten Vorrichtungen, die zwecks axialer Hubbewegungen ihrer Führungsstangen mit geeigneten Antrieben ( bspw. pneumatisch oder hydraulisch betätigbare Stellzylinder) versehen sind und die wiederum an geeigneten Trägern, wie Auflageplatten, Auflagerahmen, Traggestellen od.dgl. fixiert werden. Axial verstellbar sind die die Positionierungsstifte tragenden Führungsstangen solcher Vorrichtungen deshalb, um die Positionierungsstifte nach Abschluss eines oder mehrerer Bearbeitungsgänge wieder aus den Öffnungen der Bleche herausziehen zu können. Wie vorerwähnt und unter Verweis auf die DE 201 16 016 U1 sind dabei die Führungsstangen konstruktionsbedingt verdrehfest in ihren Gehäusen angeordnet, obgleich Verdrehsicherungen für in Draufsicht kreisförmige Positionierungsstifte keine Bedeutung haben, da solche Stifte keiner Richtungsorientierung bedürfen. Im übrigen werden Verdrehsicherungen an solchen Vorrichtungen auch beispielsweise durch im Querschnitt ovale Antriebsstellzylinder erreicht oder auch durch im Gehäuse nutartige Führungen für an den Führungsstangen angeordnete Querzapfen, worauf der Oberbegriff des Patentanspruches 1 Bezug nimmt. Solche ebenfalls keine Drehung der Positionierungsstifte zulassenden Nutführungen für Querzapfen an Stellstangen sind auch an einer besonderen, durch im Positionierungsstift angeordnete aus- und rückstellbare Haltefinger für die zu fixierenden Bleche sehr aufwändigen Vorrichtungskonstruktion nach der EP 0 894 572 A1 bekannt, wobei hier das freie Ende der Führungsstange selbst den Positionierungsstift bildet.

Da sich durch Bearbeitungsvorgänge, wie insbesondere Verschweißungen, Verformungen, Stanzungen od.dgl., Verspannungen in den Blechen ergeben können und sich diese auch zwischen den Positionierungsstiften und den sie umfassenden Öffnungsrändern der Bleche bemerkbar machen, sind Verdrehsicherungen insoweit sogar bis zu einem gewissen Grade als nachteilig anzusehen, da beim Niederziehen der Positionierungsstifte eine geringe Verdrehbarkeit der Stifte an sich wünschenswert ist, damit sich bei einer Bearbeitung einstellende Verspannungen zwischen den Positionierungsstiften und den Öffnungsrändern der Bleche problemloser lösen können.

In Verbindung mit in Draufsicht nicht kreisfömigen Positionierungsstiften, also bspw. rechteckigen oder langlochförmigen Stiften, die häufig auch benutzt werden müssen, ist aber aus Gründen einer dann genauen Richtungsorientierung solcher Stifte zwingend eine Verdrehsicherung zu fordern, die aber nicht ohne weiteres im Einklang damit zu bringen ist, gleichzeitig für eine erleichterte Lösbarkeit der Stifte aus den Löchern der Bleche zu sorgen.

Ausgehend von einer Vorrichtung der eingangs genannten Art, liegt der Erfindung die Aufgabe zugrunde, diese dahingehend umzugestalten und zu verbessern, dass unter Beibehaltung der Verwendbarkeit auch für in Draufsicht kreisförmige Positionierungsstifte eine positionsgenaue Verdrehsicherheit für nicht kreisförmige, also orientierungsbedürftige Stifte gewährleistet ist, dies aber verbunden mit den Maßgaben, auch für eine erleichterte Lösung solcher nicht kreisförmigen Stifte aus den im Querschnitt entsprechenden Durchgriffslöchern am Werkstück und und damit auch für ein verbessertes Verschleißverhalten zu sorgen.

Diese sich bis zu einem gewissen Grade widersprechenden Forderungen, nämlich einerseits positionsgenaue Erfassung und Haltung der Bleche bei deren Bearbeitung und andererseits momentane Aufhebung der Verdrehsicherung beim Herausziehen des Positionierungsstiftes sind mit einer Vorrichtung der eingangs genannten Art nach der Erfindung durch die im Kennzeichen des unabhängigen Patentanspruches 1 angeführten Merkmale gelöst.

Mit anderen Worten und orientiert an einer konkreten noch näher zu beschreibende Umsetzung besteht die Lösung der gestellten Aufgabe darin, dass die Führung in ihrem der Ausfahrendstellung der Führungsstange entsprechenden Endbereich zur Längsachse der Führung bevorzugt symmetrisch konvergierend geneigte Flanken aufweist und der in die Führung eingreifende Querzapfen mindestens an seinem in die Führung eingreifenden Ende mit einer mit den beiden Flanken in tangentialem Linienkontakt bringbaren Außenkontur versehen ist und dass die Breite der Führung vom Flankenneigungsansatz aus in Bezug auf das Breitenmaß der Außenkontur des Endes des Querzapfens mit einem eine geringe Drehung der Führungstange zulassendem Übermaß bemessen ist.

Die Maßgabe bezgl. der Breite bzw. des eine geringe Drehung zulassenden Übermaßes der Führung in Bezug auf das Breitenmaß des in die Führung eingreifenden Ende des Querzapfens hat ihren Grund darin, dass bei nicht kreisförmigen Draufsichtsformen der Positionierungsstifte per se nur eine kaum wahrnehmbare Drehung der Führungsstange möglich und diese auch noch von der Paßgenauigkeit zwischen Stift und Stiftaufnahmeöffnung im Blech abhängig ist. Um gewissermaßen einen Trennruck zwischen Stift und Blech beim Niederziehen der Stifte zustandekommen lassen zu können, reicht dafür das angegebene Übermaß in der Größenordnung von insgesamt nur 0,5 bis maximal 2 mm aus.

Der erfindungsgemäß ausgestaltete und für die Ausfahrstellung des Positionierungsstiftes maßgebende Endbereich der Führung, der für die Ausfahr- bzw. Endstellung der Führungsstange und damit des jeweiligen Positionierungsstiftes maßgebend ist, stellt eine für den Querzapfen zwingend zentrierend wirkende Engstelle, repräsentiert durch den Linienkontakt, dar, die für die richtige Orientierung eines mit der Führungsstange verbundenen, in Draufsicht nicht kreisförmigen Positionierungsstiftes sorgt, wobei aber die sich an diese Engstelle in Richtung Stiftrückzug anschließenden Flanken der Führung dem zylindrischen Ende des Querzapfens gerade so viel Spiel lassen, dass eine Minimaldrehung der Führungsstange ermöglicht ist, die, wie sich gezeigt hat, auch ausreichend ist, etwaige, bei der Bearbeitung entstandene Verspannungskontakte zwischen Blech und Positionierungsstift ruckartig zu lösen. Abgesehen davon, trägt dieses geringfügige Spiel zur verschleißminderung zwischen Ende Querzapfen und Führung bei und letztlich auch am Positionierungsstift selbst. Die bisherige Vorstellung, eine Verdrehsicherung per Querzapfen an der Führungsstange über den ganzen Hubweg vorsehen zu müssen, ist also verlassen und dahin verlegt, wo sie richtungsorientierend für den Positionierungsstift tatsächlich maßgebend ist. Maßgebend ist natürlich auch, dass die Führungsstange der erfindungsgemäßen Vorrichtung, vom Antrieb her gesehen, nicht drehbehindert sein darf, wie das bei der Vorrichtung nach der genannten DE 201 16 016 U1 der Fall ist oder bei einem Antrieb mit elliptischem Kolben und damit fest verbundener Kolben- bzw. Führungsstange.
Obgleich eine derartige Vorrichtung insbesondere auf in Draufsicht nicht kreisförmige Positionierungsstifte abgestellt ist, kann diese selbstverständlich auch für die Benutzung von in Draufsicht kreisförmigen Stiften verwendet werden.

Mit Rücksicht darauf, dass für das ruckartigen Lösen nur eine minimale Drehung eines Positionierungsstiftes erforderlich ist, könnte im Gegensatz zur oben erläuterten konkreten Umsetzung statt beidseitig konvergierender Flanken auch nur eine solche gegenüber einer gerade auslaufenden Flanke in Betracht gezogen werden, was insbesondere auch von der Laufbreite des in die Führung eingreifenden Querzapfens abhängig ist, der sich ja, da er nur nach einer Seite der Führung ausweichen kann, bei Drehung von der Lauffläche der Führung abheben würde, d.h., diese geringfügig schräge Abhebung von der sich gerade erstreckenden Führungslauffläche würde sich letztlich mit einer entsprechenden minimalen Biegebelastung der Führungsstange bemerkbar machen. Aus diesem Grunde wird die vorerläuterte, konkrete Ausführungsform der Vorrichtung mit den beidseitig symmetrisch konvergierend geneigten Flanken bevorzugt.

Die erfindungsgemäße Vorrichtung mit ihren vorteilhaften Weiterbildungen wird anhand der zeichnerischen Darstellung von Ausführungsbeispielen nachfolgend näher erläutert, wobei auf die bevorzugte Ausführungsform Bezug genommen wird.

### Es zeigt

- Fig. 1: das Gehäuse in Außenansicht mit Einblick auf die Führung, die Führungsstange und das mit einem Kugellager bestückte Ende des Querzapfens;
- Fig. 2: einen Schnitt durch das Gehäuse längs Linie II-II in Fig.1;
- Fig. 3: vergrößert und in Ansicht die Führung für das Ende des Querzapfens;
- Fig. 4: im Schnitt die Führungsstange mit aufgesetztem Halter für einen Positionierungsstift;
- Fig. 5: schematisch eine andere Ausführungsform der Führung;
- Fig. 6, 7: perspektivisch Formen von Positionierungsstiften und
- Fig. 8, 9: Blechabschnitte mit den entsprechenden Öffnungen bzw. Löchern für die Positionierungsstifte gemäß der Fig. 5, 6.

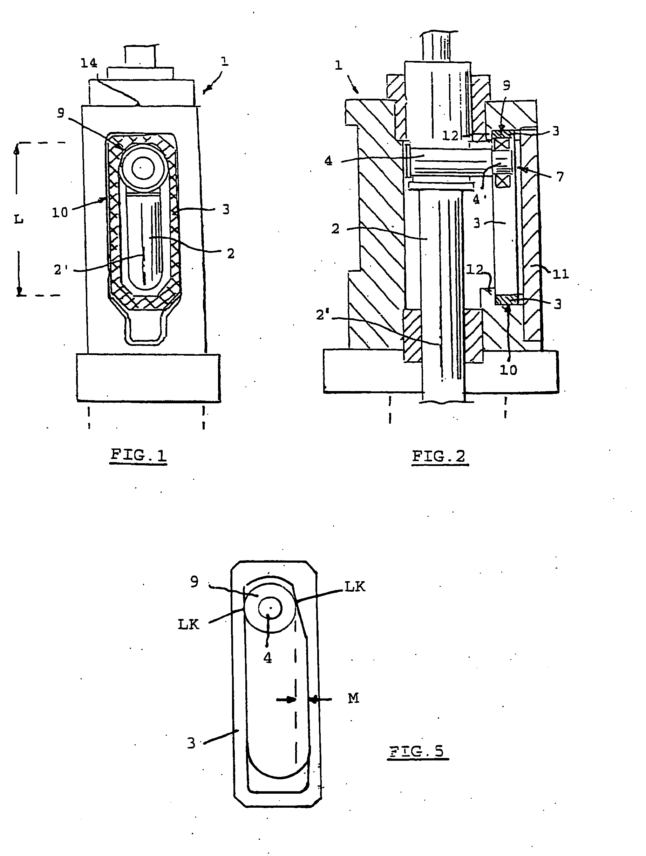

Die Vorrichtung, von der nachfolgend ausgegangen ist, besteht für den genannten Zweck aus einer in einem Gehäuse 1 axial verstellbar gelagerten Führungsstange 2, die mittels eines in eine achsparallele, langlochartige Führung 3 des Gehäuses 1 eingreifenden Querzapfens 4 verdrehgesichert ist. Außerdem ist die Führungsstange an ihrem freien Ende mit Elementen 5 (siehe Fig. 5) zur Aufnahme eines Positionierungsstiftes 6 versehen. Die Länge L der Führung 3 ist dabei im Wesentlichen durch den Verstellweg der Führungsstange 2 definiert. Der pneumatisch oder hydraulisch betätigbare Umkehrantrieb für das Ausfahren und Niederziehen der Führungsstange 2 ist in den Fig. 1, 2 unter dem Gehäuse 1 nur gestrichelt angedeutet.

Nachfolgend wird auf die bevorzugte Ausführungsform des Endes 4' des Querzapfens 4 Bezug genommen, dessen Außenkontur AK nämlich allein schon aus Herstellungsgründen zweckmäßig zylindrisch ausgebildet ist.

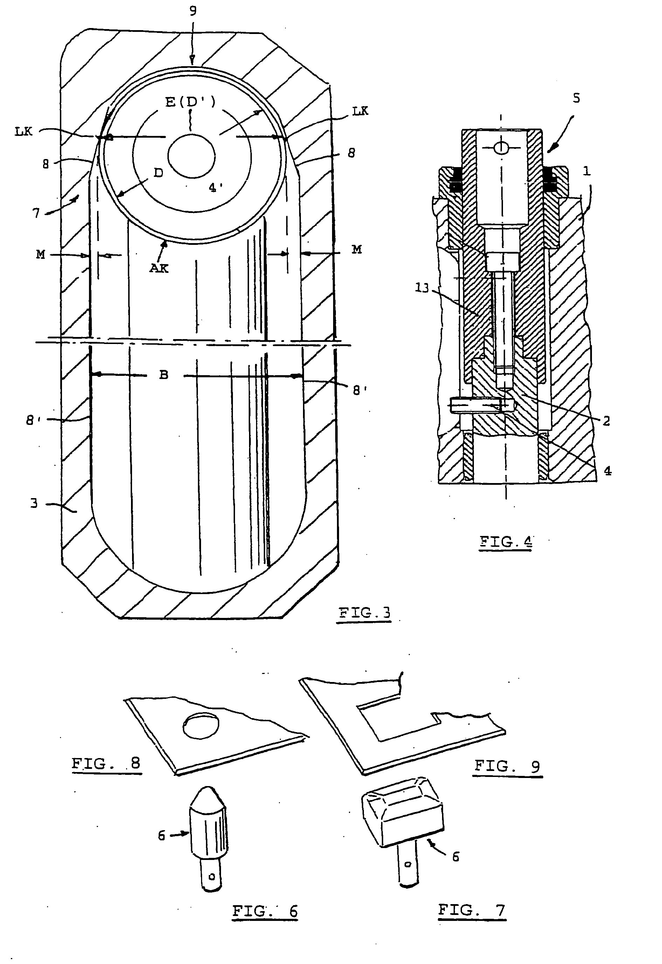

Davon ausgehend, besteht die Vorrichtung unter Verweis auf die Figuren 1 bis 3 darin, dass der in die Führung 3 eingreifenden Querzapfen 4 mindestens an seinem in die Führung 3 eingreifenden Ende 4' zylindrisch ausgebildet ist und die Führung 3 in ihrem der Ausfahrstellung der Führungsstange 2 entsprechenden Endbereich 7 zur Längsachse 2' der Führung 3 symmetrisch konvergierend geneigte Flanken 8 aufweist. Die Breite B der Führung 3 vom Neigungsansatz NA aus ist in Bezug auf den Durchmesser D des Endes 4' des Querzapfens 4 mit einem eine geringe Drehung der Führungsstange 2 zulassenden Übermaß M (siehe Fig. 3) bemessen, für das ein Maß von insgesamt 0,5 bis maximal 2 mm in Betracht kommt, um das die ansonsten geforderte und auch vorhandene Verdrehsicherheit in vertretbarem Umfange gewissermaßen zu Gunsten leichter Lösbarkeit zwischen Positionierungsstift 6 und Blech gemindert wird. Die beiden Linienkontakte LK in Figur 3 bilden eine Engstelle E in der Führung 3, auf deren Maß D' sich das kleine Übermaß M der Breite B der Führung bezieht.

Dabei sei darauf hingewiesen, dass eine eventuelle geringfügige Verdrehung des Positionierungsstiftes 6 nicht etwa durch die Vorrichtung selbst bewirkt wird, sondern von der Art der etwaigen, unter Spannung stehenden Kontaktstelle zwischen Blech und Positionierungsstift abhängt und von da aus zu einer die Kontaktstelle lösenden Minimaldrehung der Führungsstange 2 führt.

Statt das zylindrische Ende des Querzapfens 4 sich als starres Element nicht direkt in der Führung 3 bewegen zu lassen, wird, wie dargestellt, auf dem Ende 4' des Querzapfens 4 vorteilhaft ein Rollkörper 9 in Form eines in seiner Größe passenden Radial-Kugellagers angeordnet, um nur eine günstigere Rollreibung zur Wirkung kommen zu lassen.

Was die in Figur 3 vergrößert dargestellte Führung 3 betrifft, so ist diese vorteilhaft als Austauschteil aus gehärtetem Material in einer Ausnehmung 10 (siehe auch Figuren 1, 2) des Gehäuses 1 angeordnet, wobei die gegen die Führungsstange 2 offene Ausnehmung 10 aus Gründen einer einfachen Montage auch nach außen offen aber mit einem im Gehäuse eingelassenen Deckel 11 verschlossen ist. Mit diesem Deckel 11 wird die lediglich einen Rahmen bildende Führung 3 gegen ein ebenfalls rahmenartiges am Gehäuse ausgebildetes Widerlager 12 verspannt und damit im Gehäuse 1 fixiert.

Die extrem vergrößerte Darstellung der Führung 3 in Figur 3 macht in Verbindung mit dem ebenfalls mit dargestellten Rollkörper 9 deutlich, dass die exakte, mittige Ausrichtung des Rollkörpers 9, damit des Zapfens 4 und damit in Folge wiederum der Führungsstange 2 und des auf dieser sitzenden Positionierungsstiftes 6 dann beginnt, sobald der Rollkörper 9 in den Bereich der konvergierend geneigten Flanken 8 der Führung 3 gelangt und sich mit den beiderseitigen Linienkontakten LK an die Flanken anlegt, wobei die beiden die Engstelle E bildenden Linienkontakte LK und die Flanken 8' der Führung 3 das vorerwähnte jeweils halbe Übermaß M definieren.

Die Fig. 4 verdeutlicht nur der Vollständigkeit halber die Verbindung zwischen der Führungsstange 2 und dem daran anzubringenden Positionierungsstift 6 mittels einer Hülse 13.
Außerdem ist ebenfalls der Vollständigkeit halber in Fig. 5 die Führung 3 für den Querzapfen 4 bzw. den Rollkörper 9 in geringfügig abgewandelter Ausführungsform dargestellt, wobei nur eine geneigte Flanke 8 vorhanden ist, der eine nicht geneigte Flanke in der Führung 3 gegenübersteht, sich aber auch zwei Linienkontakte LK ergeben.

Perspektivisch sind in den Fig. 6. 7 Formen von zylindrischen und viereckigen Positionierungsstiften 6 verdeutlicht und in den Fig. 8, 9 Blechabschnitte mit den entsprechenden Öffnungen bzw. Löchern für die Positionierungsstifte gemäß der Fig. 6,7.

Da die konvergierend geneigten Flanken 8 und deren Mitte von außen nicht erkennbar sind, dies aber für die Anbringung der Vorrichtung an einem Träger nicht unwesentlich ist, ist vorteilhaft sichtseitig am Gehäuse 1 eine mittig zu den konvergierend geneigten Flanken 8 angeordnete Markierung 14 (siehe Fig. 1), wie Strich-, Punkt- Pfeilmarkierung, vorgesehen.

### Bezugszeichenliste:

- 1: Gehäuse
- 2: Führungsstangen
- 3: Führung
- 4: Querzapfen
- 4': Ende des Querzapfens
- 5: Elemente
- 6: Positionierungsstifte
- 7: Endbereich der Führung
- 8: geneigte Flanke
- 8': Flanke
- 9: Rollkörper
- 10: Ausnehmung
- 11: Deckel
- 12: Widerlager
- 13: Hülse
- 14: Markierung

- AK: Außenkontur
- D: Durchmesser
- E: Engstelle
- D': Maß der Engstelle
- B: Breite der Führung 3
- L: Länge der Führung 3
- LK: Linienkontakt
- M: Übermaß
- NA: Neigungsansatz

## Patentansprüche

1. Vorrichtung zum Verstellen von Positionierungsstiften zur Lagefixierung von Werkstücken auf Werkstückträgern, bestehend aus einer in einem Gehäuse (1) axial verstellbar gelagerten Führungsstange (2), die mittels eines in mindestens eine zur Führungsstange (2) achsparallel, langlochartige, mit einer Breite (B) bemessenen Führung (3) des Gehäuses (1) eingreifenden Querzapfens (4) in Ausfahrendstellung verdrehgesichert und mit Elementen (5) zur Aufnahme eines Positionierungsstiftes (6) viersehen ist,
**dadurch gekennzeichnet,**
**daß** im die zentrierte Ausfahrendstellung des Querzapfens (4) definierenden Endbereich (7) der Führung (3) eine in Bezug auf die Breite (B) der Führung (3) weniger breite Engstelle (E) angeordnet ist, die in Endstellung des Querzapfens (4) der Führungsstange (2) mit diesem in Linienkontakt (LK) steht.

2. Vorrichtung nach Anspruch 1,
**dadurch gekennzeichnet,**
**dass** das Maß (D') der die Engstelle (E) bildenden Linienkontakte (LK) um 0,5 - maximal 2 mm kleiner bemessen ist als die Breite (B) der Führung (3).

3. Vorrichtung nach Anspruch 1 oder 2,
**dadurch gekennzeichnet,**
**daß** die Engstelle (E) aus symmetrisch in Richtung Positionierungsstift (6) konvergierend geneigten Flanken (8) der Führung (3) gebildet ist, wobei der in die Führung (3) eingreifende Querzapfen (4) mindestens an seinem in die Führung (3) eingreifenden Ende (4') mit einer mit den beiden Flanken (8) in tangentialen Linienkontakt (LK) bringbaren Außenkontur (AK) versehen ist und wobei die parallel zur Führungsstange (2) erstreckten Flanken (8') der Führung (3) vom Neigungsansatz (NA) der geneigten Flanken (8) ausgehend angeordnet sind.

4. Vorrichtung nach einem der Ansprüche 1 bis 3,
**dadurch gekennzeichnet,**
**daß** die Außenkontur (AK) des Endes (4') des Querzapfens (4) zylindrisch ausgebildet ist.

5. Vorrichtung nach einem der Ansprüche 1 bis 4,
**dadurch gekennzeichnet,**
**dass** auf dem Ende (4') des Querzapfens (4) ein Rollkörper (9) angeordnet ist.

6. Vorrichtung nach Anspruch 5,
dadurchg gekennzeichnet,
dass der Rollkörper (9) ein Radial-Kugellager ist.

7. Vorrichtung nach einem der Ansprüche 1 bis 6,
**dadurch gekennzeichnet,**
**dass** die Führung (3) als Austauschteil in einer gegen die Führungsstange (2) offenen Ausnehmung (10) des Gehäuses (1) angeordnet ist.

8. Vorrichtung nach Anspruch 7,
**dadurch gekennzeichnet,**
**dass** die Führung (3) in Form eines Rahmens ausgebildet ist.

9. Vorrichtung nach Anspruch 7,
**dadurch gekennzeichnet,**
**dass** die Führung (3) aus gehärtetem Material gebildet ist.

10. Vorrichtung nach Anspruch 8,
**dadurch gekennzeichnet,**
**dass** die gegen die Führungsstange (2) offene Ausnehmung (10) des Gehäuses (1) nach außen offen und mit einem Deckel (11) verschlossen ist.

11. Vorrichtung nach Anspruch 10,
**dadurch gekennzeichnet,**
**daß** die rahmenartig ausgebildete Führung (3) zwischen Deckel (11) und einem ebenfalls rahmenartigen Widerlager (12) des Gehäuses (1) eingespannt fixiert ist.

12. Vorrichtung nach einem der Ansprüche 1 bis 11,
**dadurch gekennzeichnet,**
**dass** sichtseitig am Gehäuse (1) eine mittig zu den konvergierend geneigten Flanken (8) angeordnete Markierung (14), wie Strich-, Punkt- Pfeilmarkierung, vorgesehen ist.

## Claims

1. A device for adjusting positioning pins for fixing the position of workpieces on workpiece carriers, consisting of a guide rod (2) which is mounted in an axially adjustable manner in a housing (1) and is rotationally secured in the extended end position by means of a transverse peg (4) which engages in at least one slot-like guide (3) of the housing (1), which guide is axis parallel to the guide rod (2) and has a width (B), and is provided with elements (5) for receiving a positioning pin (6), **characterised in that** a narrow point (E) which is less wide in relation to the width (B) of the guide (3) is arranged in the end region (7) of the guide (3) which defines the centred extended end position of the transverse peg (4), which narrow point is in line contact (LK) with the transverse peg (4) of the guide rod (2) when the latter is in the end position.

2. The device according to Claim 1,
**characterised**
**in that** the dimension (D') of the line contacts (LK) forming the narrow point (E) is 0.5 - no more than 2 mm smaller than the width (B) of the guide (3).

3. The device according to Claim 1 or 2,
**characterised**
**in that** the narrow point (E) is formed from flanks (8) of the guide (3) , which are inclined in a converging manner symmetrically in the direction of the positioning pin (6), wherein the transverse peg (4) engaging in the guide (3) is provided at least on its end (4') which engages in the guide (3) with an outer contour (AK) which can be brought into tangential line contact (LK) with the two flanks (8) and wherein the flanks (8') of the guide (3) extending parallel to the guide rod (2) are arranged emanating from the slope edge (NA) of the inclined flanks (8).

4. The device according to one of Claims 1 to 3, **characterised**
**in that** the outer contour (AK) of the end (9') of the transverse peg (4) is cylindrical.

5. The device according to one of Claims 1 to 4, **characterised**
**in that** a roller body (9) is arranged on the end (4') of the transverse peg (4).

6. The device according to Claim 5,
**characterised**
**in that** the roller body (9) is a radial ball bearing.

7. The device according to one of Claims 1 to 6, **characterised**
**in that** the guide (3) is arranged as a replacement part in a recess (10) in the housing (1) which is open towards the guide rod (2).

8. The device according to Claim 7,
**characterised**
**in that** the guide (3) is in the form of a frame.

9. The device according to Claim 7,
**characterised**
**in that** the guide (3) is formed from hardened material.

10. The device according to Claim 8,
**characterised**
**in that** the recess (10) in the housing (1) which is open towards the guide rod (2) is open towards the outside and closed with a lid (11).

11. The device according to Claim 10,
**characterised**
**in that** the frame-like guide (3) is fixed in a clamped manner between the lid (11) and a likewise frame-like counter-bearing (12) of the housing (1).

12. The device according to one of Claims 1 to 11, **characterised**
**in that** a mark (14), such as a dashed or dotted arrow mark, which is arranged centrally to the flanks (8) which are inclined in a converging manner, is provided on the visible side of the housing (1).

## Revendications

1. Dispositif pour déplacer des tiges de positionnement destinées à la fixation de position de pièces sur des porte-pièces, composé d'une barre de guidage (2) montée déplaçable dans le sens axial dans un boîtier (1), qui est bloquée contre la torsion dans la position de fin de course de sortie au moyen d'un axe transversal (4), en prise dans au moins une glissière (3) du boîtier (1) analogue à un trou oblong, ayant une dimension d'une largeur (B), parallèle à l'axe de la barre de guidage (2) et qui est muni d'éléments (5) pour recevoir un axe de positionnement (6), **caractérisé en ce que**
dans la zone d'extrémité (7) de la glissière (8) définissant la position de fin de course centrée de l'axe transversal (4) est disposée un emplacement étroit (E) moins large par rapport à la largeur (B) de la glissière (3) qui, dans la position de fin de course de l'axe transversal (4) de la barre de guidage (2) , se trouve en contact linéaire (LK) avec celui-ci.

2. Dispositif selon la revendication 1 **caractérisé en ce que** la mesure [D') des contacts linéaires (LK) formant l'emplacement étroit (E) est dimensionnée de 0,5 - 2 mm maximum plus petite que la largeur (B) de la glissière (3).

3. Dispositif selon la revendication 1 ou 2 **caractérisé en ce que** l'emplacement étroit (E) est formé de flancs (8) de la glissière (3) inclinés convergeant symétriquement dans la direction de l'axe de positionnement (6), l'axe transversal (4) en prise dans la glissière (3) étant muni au moins à son extrémité (4') en prise dans la glissière (3) d'un contour extérieur (AK) pouvant être mis en contact linéaire (LK) tangentielle avec les deux flancs (8) et les flancs (8') de la glissière (3) s'étendant parallèlement à la barre de guidage (2) étant disposés partant de l'épaulement d'inclinaison (NA) des flancs inclinés (8).

4. Dispositif selon une des revendications 1 à 3 **caractérisé en ce que** le contour extérieur (AK) de l'extrémité (4') de l'axe transversal (4) est conçu cylindrique.

5. Dispositif selon une des revendications 1 à 4 **caractérisé en ce qu'**un corps roulant (9) est disposé sur l'extrémité (4') de l'axe transversal (4).

6. Dispositif selon la revendication 5 **caractérisé en ce que** le corps roulant (9) est un roulement à billes à contact radial.

7. Dispositif selon une des revendications 1 à 6 **caractérisé en ce que** la glissière (3) est disposée en tant que pièce d'échange dans un évidement (10) du boîtier (1), ouvert vers la barre de guidage (2).

8. Dispositif selon la revendication 7 **caractérisé en ce que** la glissière (3) est conçue sous la forme d'un cadre.

9. Dispositif selon la revendication 7 **caractérisé en ce que** la glissière (3) est conçue en matériau trempé.

10. Dispositif selon la revendication 8 **caractérisé en ce que** l'évidement (10) du boîtier (1), ouvert vers la barre de guidage (2) est ouvert vers l'extérieur et est fermé avec un couvercle (11).

11. Dispositif selon la revendication 10 **caractérisé en ce que** la glissière (3) conçue en forme de cadre est fixée serrée entre le couvercle (11) et une butée d'appui (12) du boîtier (1), également en forme de cadre.

12. Dispositif selon une des revendications 1 à 11 **caractérisé en ce que** du côté visible sur le boîtier (1) est prévu un repère (14) disposé centré par rapport aux flancs (8) inclinés de façon convergente, comme un repère à trait, à points ou à flèche.
